**Europäisches Patentamt**

**European Patent Office**

**Office européen des brevets**

(11) Publication number: **0 185 458**
**B1**

(12) **EUROPEAN PATENT SPECIFICATION**

(45) Date of publication of patent specification: **19.09.90**

(21) Application number: **85308260.0**

(22) Date of filing: **13.11.85**

(51) Int. Cl.⁵: **C 08 F 6/04**

(54) Fractionation of water-soluble polymers.

(30) Priority: **16.11.84 GB 8428984**

(43) Date of publication of application:
**25.06.86 Bulletin 86/26**

(45) Publication of the grant of the patent:
**19.09.90 Bulletin 90/38**

(84) Designated Contracting States:
**AT BE CH DE FR GB IT LI NL SE**

(56) References cited:
**EP-A-0 046 573**
**EP-A-0 127 388**
**GB-A-2 109 363**

(73) Proprietor: **ALLIED COLLOIDS LIMITED**
**P.O. Box 38 Low Moor**
**Bradford West Yorkshire, BD12 0JZ (GB)**

(72) Inventor: **Farrar, David**
**13 Greenfield Lane**
**Idle Bradford West Yorkshire (GB)**
Inventor: **Hawe, Malcolm**
**3 Broombank Birkby**
**Huddersfield West Yorkshire (GB)**

(74) Representative: **Lawrence, Peter Robin**
**Broughton et al**
**GILL JENNINGS & EVERY 53-64 Chancery Lane**
**London WC2A 1HN (GB)**

Courier Press, Leamington Spa, England.

# EP 0 185 458 B1

**Description**

We describe in our EP 0127388 (application 84303332.5, not published until after the priority date of the present application) previously known ways of separating different molecular weight components from water soluble polymers. When making the invention described in that specification it had been our object to devise a process by which a water soluble acidic polymer can be fractionated into higher and lower molecular weight fractions and in which the molecular weight in each fraction can be freely selected simply by appropriate selection of the fractionation conditions.

We describe in that specification a process in which a solution in a blend of water and a Cl to 5 alcohol of a water soluble polymer containing acid groups is separated into an aqueous phase containing a higher molecular weight fraction and an organic phase containing a lower molecular weight fraction and we describe that the acid groups are neutralised with a cation selected from sodium, potassium, lithium and ammonium and the molar proportion of neutralised acid groups is from 10 to 55% when the cation is selected from sodium and potassium, 10 to 70% when the cation is ammonium and 30 to 90% when the cation is lithium. The preferred polymers are polymers formed from acidic monomers selected from acrylic acid and 2-acrylamido-2-methyl propane sulphonic acid. The preferred way of forming the solution that is to be phase separated comprises polymerising the acidic monomer in the free acid form as a solution in water and the alcohol and then adding the appropriate amount of cation, although the specification does say that other methods can be used.

In the present invention a solution is formed of a water soluble polymer containing acid groups in a blend of a polar solvent, water and base in an amount sufficient to neutralise at least 10% but not more than 90% molar of the said acid groups and the solvent, the base and the amount of base and/or the amount of solvent are selected to cause phase separation of the solution into an aqueous phase containing a higher molecular weight polymeric fraction and an organic phase containing a lower molecular weight polymeric fraction and each fraction is recovered and has a lower polydispersity than the starting polymer (as explained below), and in this process at least one of the following conditions is observed namely

(a) the solution of water soluble polymer in the blend of water, polar solvent and base is formed by polymerisation of a water soluble monomer containing acid groups in aqueous solution in the presence of the base, and if necessary then adjusting the amount of base and/or solvent so as to cause the desired phase separation; or

(b) Some or all of the polar solvent is added after the polymerisation to cause the phase separation; or

(c) the polar solvent is an aliphatic ketone and the polymer has a molecular weight above 50,000; or

(d) the polymer is formed from one or more monomers comprising allyl sulphonic acid. For instance such a polymer can be fractionated in a manner as described in EP 0127388 using a C1 to C5 alcohol as polar solvent and using 10 to 55% molar neutralisation with sodium or potassium, 10 to 70% molar neutralisation with ammonium or 30 to 90% molar neutralisation with lithium.

This process differs from conventional fractionation processes (e.g. as described in EP 46573 and GB 2109363) in that the conditions are selected to yields two valuable fractions, instead of merely removing an impurity fraction.

The precise split between the lower and higher molecular weight fractions can be selected by altering the process conditions, and in particular the degree of neutralisation, and so the method provides, for the first time, a simple process by which an acidic, water soluble, polymer can be fractionated into preselected molecular weight fractions. Unlike prior processes where the organic fraction is usually rejected, in the invention both fractions of polymer are commercially useful and so are recovered and used, the fraction in the organic phase being useful where lower molecular weights are desired and the fraction in the aqueous phase being useful where higher molecular weights are desired.

Additionally we have surprisingly found that the polymer in each fraction generally has at least one activity that is very much improved compared to the activity of the starting polymer. Often the polymer of one fraction has one type of greatly improved activity (for instance as a viscosifier) while the polymer in the other fraction may have a different type of greatly improved activity (for instance as a dispersant).

The polymer in each fraction will have lower polydispersity (weight average molecular weight divided by number average molecular weight) than the starting polymer. For instance the initial value is almost always above 1.6, and often is above 2, but the fractions obtained in the invention often have values of below 1.5, often 1.05 to 1.45 and most preferably 1.1 to 1.4.

Each of the polymer solutions can be used in the form in which it is obtained by phase separation, for instance simply by mixing the solution into the water or other liquor to be treated, or the polymer can be recovered from the solution by evaporation, precipitation or other conventional recovery techniques. The polymer in each of the separated solutions is generally in a partially neutralised state and can be acidified or fully neutralised in conventional manner if desired.

The process conditions that can be altered to affect the split between lower and higher molecular weight fractions include the choice of solvent, the choice of base, the amount of solvent and the amount of base. Once one has appreciated the novel concept that it is possible to fractionate usefully provided the acidic groups are partially neutralised, as opposed to full neutralisation in the prior art, it is possible to obtain any particular desired split or fractionation by appropriate selection of solvent, base, and amounts of each.

2

The particular solvent may have to be selected having regard to the nature of the polymer, and in particular its molecular weight. For instance the polar solvents are generally selected from $C_{1-5}$ alcohols and $C_{3-8}$ (generally $C_3$ or $C_4$) aliphatic ketones, most preferably isopropanol or acetone. Although the alcohols are very suitable for a wide range of polymers they are of particular value for the lower molecular weight polymers, molecular weight preferably below 100,000, most preferably below 30,000 and, especially, below 10,000. In contrast, the ketones are primarily of value for fractionating higher molecular weight polymers, for instance having average molecular weight above 50,000, generally above 100,000 and preferably above 200,000 or even 500,000.

The polymer can be any water soluble polymer containing acidic groups and may have been made by any suitable polymerisation technique. The polymer is generally obtained by polymerisation of an ethylenically or other unsaturated monomer that contains acid groups either alone or with other ethylenically unsaturated monomeric material. Oligomers formed from the corresponding monomers may be used in place of the monomers. The acid groups are generally carboxylic acid or sulphonic acid or sulphuric acid groups. The monomers are often acrylic monomers and therefore preferred acidic monomers include one or more acrylic acid, 2-acrylamido-2-methyl propane sulphonic acid (AMPS), 2-acrylamido-2-phenyl propane sulphonic acid, methacrylic acid, itaconic acid, crotonic acid, vinyl sulphonic acid, vinyl sulphuric acid, allyl sulphonic acid, maleic acid and fumaric acid, the preferred monomers being acrylic acid and AMPS. Any comonomers that can be copolymerised, in the amounts present, with the acidic monomer or monomers to form a water soluble polymer can be used and include monomers such as acrylamide, acrylonitrile and acrylic esters. Generally at least 50% by weight and often at least 80% by weight of the monomers from which the polymer is formed are acidic monomers. The polymer is generally a linear polymer.

Preferred polymers for use in the invention are polyacrylic acid homopolymers but other very valuable polymers that may be treated in the invention are acrylic acid copolymers, especially copolymers with 2-acrylamido-2-methyl propane sulphonic acid or its salts, methacrylic acid homopolymer, itaconic acid methacrylic acid copolymers, vinyl sulphonic acid homopolymer and allyl sulphonic acid homopolymer and polyvinyl sulphuric acid.

The average molecular weight of the polymer that is to be fractionated can vary widely provided the value is not so high that the polymer is insoluble or forms a solution that has such a high viscosity that it cannot be fractionated into two phases or that forms, upon fractionation, a phase that has such a high viscosity that it cannot conveniently be separated from the other phase. Generally the molecular weight is 500 to 1 million and the most valuable advantages are found when the average molecular weight is below 100,000, generally below 30,000 and especially between 1,000 and 10,000, for instance around 1,500 to 4,500.

The polymer may have been made by any conventional polymerisation process and may have then been isolated, for instance as a solid, from any liquid phase in which it was formed, and then redissolved in the aqueous organic solution containing base used in the invention. Generally however the process of the invention is conducted on a solution of the polymer obtained by solution polymerisation of the appropriate monomers. The preferred solution polymerisation medium is an aqueous solution containing appropriate initiators or other polymerisation promoters, for instance water soluble peroxides and persulphates, or redox catalysts or catalysts for photopolymerisation and will generally include an organic solvent, for instance as a molecular weight regulator. Other known molecular weight regulators (e.g. that provides terminal —COOH, —OH or $C_{1-3}$ alkyl groups) may be included in the solution if desired.

The solution polymerisation may be conducted in the presence of the amounts of solvent, base and water required for the fractionation provided the polymerisation is conducted with sufficient agitation to prevent separation during polymerisation, the polymerisation mixture then being allowed to stand to allow separation to occur. Generally however, the polymerisation is conducted in the presence of amounts of solvent, base and water such that separation will not occur and these amounts are then adjusted after polymerisation to cause separation.

In one process the solution of polymer is made by polymerisation in a mixture of water and organic solvent and this organic solvent may serve as the organic liquid for use in the invention. Generally this solvent should be fully miscible with the aqueous polymer solution, e.g. an alcohol or acetone. A very common solvent in solution polymerisations is isopropanol and blends of water and isopropanol are often very suitable in the invention. When polymerisation is conducted in the presence of the chosen solvent fractionation can then be brought about by appropriate adjustment of the amount of cation in the solution. With many monomers the polymerisation is generally conducted on the free acid form of the monomers in which event the base adjustment is effected by adding the appropriate amount of alkali or other source of cation. If the polymerisation is carried out on a wholly neutralised form of monomer (e.g. in the polymerisation of sodium vinyl sulphate) then the cation adjustment can be brought about by adding sufficient free acid to partially acidify the neutralised groups, thereby forming a polymer having the desired degree of neutralised groups. The free acid must be sufficiently strong to acidify the neutralised polymer acid groups. Often it is a mineral acid such as hydrochloric or sulphuric acid. The free acid may be the free acid form of the acidic polymer or it may be a water insoluble acidic polymer, preferably an anionic (generally sulphonic or other strong acid) ion exchange resin.

In another process the polymerisation is conducted in the presence of base in an amount sufficient to

3

neutralise 10 to 90% of the acid groups and then the phase separation is caused by adding some or all of the polar solvent, to the required amount. If the amount of cation in the polymerisation mixture is not the optimum for the phase separation then additional base (or acid) may be added with the polar solvent to achieve the desired degree of neutralisation.

Irrespective of whether the solution is made by blending preformed polymer, water, organic solvent and base or by adding base to the reaction product of polymerisation in aqueous organic liquid, or in any other manner, the process of the invention requires that phase separation should be brought about between aqueous and organic phase in the presence of the specified solvents and the required amounts of the cations.

The bases are preferably basic compounds of monovalent cations such as sodium, potassium, lithium and ammonium, preferably in the amounts quoted above since in general we find that with most solvents amounts outside these ranges give less satisfactory fractionation. Lower alkyl amines (e.g. ethylamine) may be suitable for some polymers, as may basic compounds of multivalent cations (provided the amount and type of cations does not result in precipitation of the polymer). Suitable multivalent cations include Ca, Zn, Cu, Mg and Al. The basic compoundy may be, for example, oxides, hydroxides, carbonates, bicarbonates, alkoxides, phosphates, hydrogen phosphates, phosphonates, polyphosphates or organic carboxylic salts where the organic acid is weaker than the polymeric acid, e.g. sodium acetate, adipate or citrate when the polymeric acid is a sulphuric or sulphonic acid.

The degree of neutralisation of the acid groups controls the fractionation. The results obtained in any particular process will depend upon, inter alia, the concentrations, the polymer type and the solvent but there is a minimum degree of neutralisation below which substantially no fractionation occurs and the system may instead remain as a homogeneous solution. When the cation of the base is sodium, potassium or ammonium the degree of neutralisation will normally be at least 10%, often at least 15% and preferably at least 25% whilst if the cation is lithium the degree of neutralisation will normally have to be at least about 30%, preferably at least 40% and generally at least 50%. If the degree of neutralisation is too high the size of the lower molecular weight fraction is unacceptably low. When the cation of the base is sodium or potassium the degree of neutralisation will normally be below 55%, preferably below 50% and most preferably below 40%. When the cation of the base is ammonium the degree of neutralisation will normally be below 70%, preferably below 60% and most preferably below 50%. When the cation of the base is lithium the degree of neutralisation will normally be below 90%, and preferably below 70%.

In any particular process the size of, for instance, the higher molecular weight fraction can be increased (with consequential reduction in its average molecular weight and consequential reduction in the size and the average molecular weight of the lower molecular weight fraction) by increasing the amount of base and conversely the size of the low molecular weight fraction can be increased by reducing the amount of base.

The process conditions are usually selected such that each fraction contains from about 10 to 90%, preferably about 20 to 80%, and most preferably 30 to 70%, by weight of the starting polymer.

The partial neutralisation of the acidic polymer is normally achieved by adding a hydroxide or other base that will provide the chosen cation in the selected amount to the dissolved polymer. Mixtures of two or more cations may be utilised, in which event the proportions will be selected such that they have the same effect as suitable amounts of the individual cations.

For any particular polymer, the degree of fractionation is dependent not only on the degree of neutralisation and the type of cation but also upon the concentration of the polymer and the chocce and amount of the alcohol or other solvent. The alcohol is preferably isopropanol but propanol and other alcohols, especially $C_2$ to $C_5$ alcohols, may be used. The proportion water:alcohol or other solvent by weight is preferably from 1:0.2 to 1:5, most preferably 1:0.5 to 1:2 with best results generally being achieved, especially when the solvent is isopropanol and the cation is sodium, when the proportion is about 1:1. The proportions should be selected such that, having regard to the degree and nature of neutralisation, each of the phases will have a polymer concentration of at least 5%, generally at least 10% and prefeably at least 15% by weight of the phase.

The amount of the polymer (measured as the acid polymer) is normally at least 5% by weight based on the weight of polymer, solvent and water (including water introduced with the alkali) and preferably is at least 10%. The concentration must not be so high that the system is so viscous that mixing and phase separation is significantly impeded and so is generally below 30%. Preferably the concentration is 15 to 25% by weight.

The phase sepasration may also be affected by the temperature at which the process is conducted. This may be between 15 and 80°C but preferqbly is between 30 and 70°C.

The process may be conducted by combining the essential components of the solution in any convenient manner, for instance by adding aqueous alkali to the aqueous organic reaction product obtained by polymerisation of the monomer or monomers in aqueous organic solution. The process may be conducted continuously or batchwise. Depending upon the degree of neutralisation, and type and strength of base, the concentration of the polymer, the amount of solvent and the temperature the phase separation may occur rapidly or slowly. For instance it may occur substantially instantaneously or it may be necessary to leave the system to stand for periods of, for instance, 5 minutes to 2 hours, typically 30 minutes to 1 hour. The separation may be conducted batchwise or continuously, with the mix being fed through a conventional separation column or separation reactor.

4

The two phases are kept separate, may be fully neutralised with the same or different alkali and organic solvent may be stripped from the organic phase by distillation.

Each of the polymer fractions is recovered for subsequent commercial use. The polymers may be used, for instance, as sand grinding aids for marble grinding, pigment dispersants, paint additives, viscosifiers or antiscalants.

The following are some examples of the invention.

Example 1

A 23% by weight solution of polyacrylic acid in a blend of equal parts by weight isopropanol and water was prepared by polymerisation of acrylic acid using ammonium persulphate as initiator, in conventional manner. Samples of the product were extracted while other samples were neutralised by the addition of varying amounts of sodium hydroxide, introduced as a 46% by weight aqueous solution. Each of the samples, after the addition of sodium hydroxide, was allowed to stand for sufficient time for an aqueous phase to separate from an organic phase (that probably contained some water) and these phases were then separated from one another in conventional manner. Each phase was then fully neutralised with sodium hydroxide and the residual alcohol was removed by distillation.

The yield of polymer in each of the phases was recorded. The products were adjusted to 40% active solids and compared as marble grinding aids as described in Example 11 of British Patent Specification No. 1,414,964. The results are set out in Table 1.

TABLE 1

| Percent neutralisation | Yield percent | | Aqueous layer milling index |
|---|---|---|---|
| | organic | aqueous | |
| 10 | 87.2 | 12.8 | — |
| 15 | 79.3 | 20.7 | — |
| 25 | 23.1 | 76.9 | 1.94 |
| 50 | 4.0 | 96.0 | 2.33 |
| 75 | 0.7 | 99.3 | 1.22 |
| 100 | 0.5 | 99.5 | 0.37 |

In the described test a milling index value of around 0.5 is generally satisfactory as it indicates commercially acceptable properties for preventing gelation of the marble dispersion.

It is apparent from the table that after full neutralisation almost all the polymer is in the aqueous phase but that substantial amounts of polymer go into the organic phase at low degrees of neutralisation. It is also very notable that the milling index is greatly improved even when the amount of polymer that is in the organic phase, instead of the aqueous phase, is quite low. For instance at 50% neutralisation the amount of polymer in the organic phase is low but the milling index is about 5 times what would be considered to be commercially adequate. At higher degrees of neutralisation only a very low amount of polymer goes into the organic phase.

Reference should be made to EP 0127388 for other examples showing the use of lithium, potassium or ammonium hydroxide in place of sodium hydroxide and showing the treatment of a copolymer with 2-acrylamido-2-methyl propane sulphonic acid.

Example 2

Other polymers are prepared by the general technique described in Example 1 but using different monomers. When the monomer consisted solely of methacrylic acid 25% neutralisation with sodium hydroxide fractionated the product into a lower molecular weight isopropanol phase that was useful as a dispersant for china clay and a higher molecular weight aqueous phase.

When the monomers consist of equal parts by weight itaconic acid and methacrylic acid 25% neutralisation with sodium hydroxide results in fractionation into a higher moleular weight aqueous phase and a lower molecular weight isopropanol phase.

When the monomer consisted of sodium vinyl sulphonate the initial polymer is in the sodium form and this can be part neutralised by acidic ion exchange resin and then fractionated using isopropanol.

Example 3

A solution of acrylic acid monomer containing sufficient sodium hydroxide to neutralise 25% of the acrylic acid groups was polymerised by thermally initiated polymerisation in isopropanol. The product fractionated into organic and aqueous phases containing, respectively, 8.9 and 91.1% by weight of the polymer. When the process was repeated with 20% neutralisation and with 15% neutralisation the organic and aqueous phases fractionated with polymer contents as shown in Table 3.

TABLE 2

| % Neutralisation | % of polymer | Mw | Mu | PD |
|---|---|---|---|---|
| 20 | 32—organic | 1284 | 1012 | 1.27 |
| | 68—aqueous | 3616 | 2515 | 1.44 |
| 15 | 44.6—organic | 2268 | 1620 | 1.40 |
| | 56.4—aqueous | 4447 | 3245 | 1.37 |

Example 4

The process of Example 3 was repeated except that the solvent that was added was acetone and the degree of neutralisation 20%. The aqueous and organic phases respectively contained 49.1 and 50.9% by weight of the polymer and the polymer in each phase had an intrinsic viscosity of 0.919 dl/g (aqueous phase) and 0.652 dl/g (organic phase). The aqueous phase was tending towards a gel.

When the process was repeated with methanol and 25% neutralisation the aqueous and organic phases respectively contained 57.8 and 42.2% by weight of the polymer and the polymer in each phase had an intrinsic viscosity of 0.423 dl/g (aqueous phase) and 0.32 dl/g (organic phase).

Example 5

A blend of 85 parts acrylic acid and 15 parts sodium allyl sulphonate was polymerised by continuous addition to isopropanol and water using ammonium persulphate, as initiator, giving a final reaction mass containing 29% polymer, 36% isopropanol and 35% water.

This was divided into two portions. One portion was fully neutralised with 46% NaOH, allowed to separate into two layers and the lower aqueous layer stripped of isopropanol by distillation, titrated for strength and molecular weight determined by GPC. This produced a control polymer.

To the second portion sufficient 46% sodium hydroxide was added to neutralise 15% of the carboxyl groups present in the polymer, the reaction mass was allowed to phase separate into both aqueous and isopropanol layers, both layers were stripped of isopropanol, fully neutralised and analysed for molecular weight. The analysis of each fraction is shown in Table 3.

TABLE 3

| | Mw | Mn | Polydispersity |
|---|---|---|---|
| Control polymer | 3612 | 2146 | 1.683 |
| 15% neutralised aqueous phase | 4210 | 2600 | 1.619 |
| 15% neutralised isopropanol phase | 2580 | 1631 | 1.582 |

**Claims**

1. A process in which a solution is formed of a water soluble polymer containing acid groups in a blend of a polar solvent, water and base in an amount sufficient to partially neutralise the acid groups, characterised in that

at least 10% but not more than 90% molar of the said acid groups are neutralised and in which the solvent, the base and the amount of at least one of the base and the solvent are selected to cause phase separation of the solution into an aqueous phase containing a higher molecular weight polymeric fraction and an organic phase containing a lower molecular weight polymeric fraction, and

each fraction is recovered and has a lower polydispersity than the starting polymer, and that at least one of the following conditions is observed, namely

(a) the solution of the water soluble polymer in the blend of water, polar solvent and base is formed by polymerisation of water soluble monomer containing acid groups in aqueous solution in the presence of the base, and if necessary then adjusting the amount of base and/or solvent so as to cause the phase separation; or

(b) some or all of the polar solvent is added after the polymerisation to cause the phase separation; or

(c) the polar solvent is a C3 to C8 aliphatic ketone and the polymer has a molecular weight above 50,000; or

(d) the polymer is a polymer of allyl sulphonic acid.

## EP 0 185 458 B1

2. A process according to Claim 1 in which the polymerisation is conducted in the presence of substantially the desired amount of base to cause the phase separation.

3. A process according to Claim 1 in which the polymerisation is conducted in the presence of an amount of base greater than is required for the phase separation and mineral acid is then added in an amount sufficient to cause phase separation.

4. A process according to any preceding Claim in which the polar solvent is a C1 to C5 alcohol, preferably isopropanol, the base contains a cation selected from sodium, potassium, lithium and ammonium and the amount of the base is such that the molar proportion of neutralised groups is from 10 to 55% when the cation is selected from sodium and potassium, 10 to 70% when the cation is ammonium and 30 to 90% when the cation is lithium.

5. A process according to Claim 4 in which the molecular weight of the polymer is below 100,000, preferably below 30,000.

6. A process according to Claim 1 in which the polar solvent is acetone and the polymer has a molecular weight above 100,000.

### Patentansprüche

1 Ein Verfahren, in welchem eine Lösung eines Säuregruppen enthaltenden wasserlöslichen Polymers in einem Gemisch aus einem polaren Lösungsmittel, Wasser und einer zum partiellen Neutralisieren der Säuregruppen ausreichenden Menge an Base gebildet wird, dadurch gekennzeichnet, daß

wenigstens 10 Mol-%, aber nicht mehr als 90 Mol-% der genannten Säuregruppen neutralisiert werden und worin das Lösungsmittel, die Base und die Menge von wenigstens einem Vertreter aus Base und Lösungsmittel so gewählt werden, daß eine Phasentrennung der Lösung in eine wäßrige Phase, die eine Polymerfraktion mit höherem Molekulargewicht enthält, und eine organische Phase, die eine Polymerfraktion mit niedrigerem Molekulargewicht enthält, eintritt, und

jede Fraktion gewonnen wird und eine niedrigere Polydispersität als das Ausgangspolymer aufweist, und daß wenigstens eine der nachstehenden Bedingungen eingehalten wird, nämlich

(a) die Lösung des wasserlöslichen Polymers im Gemisch aus Wasser, polarem Lösungsmittel und Base wird durch Polymerisation des Säuregruppen enthaltenden, wasserlöslichen Monomers in wäßriger Lösung in Gegenwart der Base gebildet, worauf erforderlichenfalls die Menge an Base und/oder Lösungsmittel so eingestellt wird, um die Phasentrennung zu bewirken; oder

(b) das poware Lösungsmittel wird zum Teil oder zur Gänze nach der Polymerisation zugesetzt, um die Phasentrennung zu bewirken; oder

(c) das polare Lösungsmittel ist ein C3 bis C8-aliphatisches Keton und das Polymer hat ein Molekulargewicht von üher 50.000; oder

(d) das Polymer ist ein Allylsulfonsäurepolymer.

2. Verfahren nach Anspruch 1, worin die Polymerisation in Anwesenheit von im wesentlichen der zur Bewirkung der Phasentrennung angestrebten Menge an Base ausgeführt wird.

3. Verfahren nach Anspruch 1, worin die Polymerisation in Anwesenheit einer Menge an Base ausgeführt wird, die größer als die zur Bewirkung der Phasentrennung erforderliche ist, und daß anschließend Mineralsäure in einer zur Bewirkung der Phasentrennung ausreichenden Menge zugesetzt wird.

4. Verfahren nach einem der vorstehenden Ansprüche, worin das polare Lösungsmittel ein C1 bis C5-Alkohol, vorzugsweise Isopropanol ist, die Base ein unter Natrium, Kalium, Lithium, und Ammonium ausgewähltes Kation enthält und die Menge an Base derart ist, daß der Molanteil an neutralisierten Gruppen von 10 bis 55% beträgt, wenn das Kation unter Natrium und Kalium ausgewählt ist.

von 10 bis 70% beträgt, wenn das Kation Ammonium ist und

von 30 bis 90% beträgt, wenn das Kation Lithium ist.

5. Verfahren nach Anspruch 4, worin das Molekulargewicht des Polymers unter 100.000, vorzugsweise unter 30.000 liegt.

6. Verfahren nach Anspruch 1, worin das polare Lösungsmittel Aceton ist und das Polymer ein Molekulargewicht von über 100.000 aufweist.

### Revendications

1. Un procédé selon lequel une solution est formée d'un polymère soluble l'eau contenant des groupes acides dans un mélange d'un solvant polaire, de l'eau et d'une base en quantité suffisante pour neutraliser partiellement les groupes acides, caractérisé en ce que

au moins 10%, mais au plus 90% molaires, desdits groupes acides sont neutralisés et en ce que le solvant, la base et la quantité de la base et/ou du solvant sont choisis pour provoquer la séparation de phases de la solution en une phase aqueuse contenant une fraction polymère à poids moléculaire supérieur et une phase organique contenant une fraction polymère à poids moléculaire inférieur, et

chaque fraction est récupérée et a une polydispersibilité inférieure à celle du polymère de départ, et en ce qu'au mions une des conditions suivantes est observée, à savoir

(a) la solution du polymère soluble dans l'eau dans le mélange d'eau, de solvant polaire et de base est

7

formée par polymérisation du monomère soluble dans l'eau contenant des groupes acides en solution aqueuse en présence de la base, et si nécessaire par ajustement ensuite de la quantité de base et/ou de solvant de façon à provoquer la séparation de phases; ou bien

(b) une partie ou la totalité du solvant polaire est ajoutée après le polymérisation pour provoquer la séparation des phases; ou bien

(c) le solvant polaire est une cétone aliphatique en $C_3$ à $C_8$ et le polymère a un poids moléculaire supérieur à 50 000; ou bien

(d) le polymère est un polymère d'acide allylsulfonique.

2. Un procédé selon la revendication 1, selon laquelle la polymèrisation est conduite en présence de la quantité désirée de base pour provoquer la séparation de phases.

3. Un procédé selon la revendication 1, selon laquelle la polymérisation est conduite en présence d'une quantité de base supérieur à celle requise pour la séparation de phases et un acide minéral est ensuite ajouté en quantité suffisante pour provoquer la séparation de phases.

4. Un procédé selon l'une quelconque des revendications précédentes selon laquelle le solvant polaire est un alcool en $C_1$ à $C_5$, de préférence l'isopropanol, la base contient un cation choisi parmi le sodium, le potassium, le lithium et, l'ammonium et la quantité de la base est telle que la proportion molaire des groupes neutralisés est de 10 à 55% lorsque le cation est choisi parmi le sodium et le potassium, de 10 à 70% lorsque le cation est l'ammonium et de 30 à 90% lorsque le cation est du lithium.

5. Un procédé selon la revendication 4, selon laquelle le poids moléculaire du polymère est inférieur à 100 000, de préférence inférieur à 30 000.

6. Un procédé selon la revendication 1, selon laquelle le solvant polaire est l'acétone et le polymère a un poids moléculaire supérieur à 100 000.